# FASCICULE DE BREVET EUROPEEN

(11) **EP 1 966 107 B1**
(45) Date de publication et mention de la délivrance du brevet: **07.02.2018**
(21) Numéro de dépôt: 06842128.8
(22) Date de dépôt: 08.12.2006
(51) Int. Cl.: C04B 37/02, F01D 5/28, F01D 9/02, F01D 9/04, F02K 3/10, F23R 3/00

(54) **ASSEMBLAGE PAR BRASAGE ENTRE UNE PIECE METALLIQUE A BASE DE TITANE ET UNE PIECE EN MATERIAU CERAMIQUE A BASE DE CARBURE DE SILICIUM (SIC) ET/OU DE CARBONE**
GELÖTETE VERBINDUNG ZWISCHEN EINEM METALLTEIL AUF TITANBASIS UND EINEM KERAMISCHEN TEIL AUF BASIS VON SILICIUMCARBID (SIC) UND/ODER KOHLENSTOFF
BRAZED JOINT BETWEEN A TITANIUM-BASED METAL PART AND A CERAMIC PART BASED ON SILICON CARBIDE (SIC) AND/OR CARBON

(30) Priorité: 08.12.2005 FR 0553788
(43) Date de publication de la demande: 10.09.2008
(73) Titulaire: Snecma Moteurs, 75015 Paris (FR); Commissariat à l'Énergie Atomique et aux Énergies Alternatives, 75015 Paris (FR)
(72) Inventeur: BENOIT, Joël Michel, F-77240 Cesson La Foret (FR); FROMENTIN, Jean-François, F-77240 Cesson La Foret (FR); GILLIA, Olivier, F-38360 Sassenage (FR); DOMERGUE, Lucas, F-51100 Reims (FR)
(74) Mandataire: Intès, Didier Gérard André
(86) Numéro de dépôt international: PCT/FR2006/051317
(87) Numéro de publication internationale: WO 2007/066051

(56) Documents cités:
- US-A- 3 977 869
- US-A- 4 239 502
- US-A- 4 411 864
- US-A- 4 416 853
- US-A- 5 113 052
- US-A- 6 131 797
- US-B1- 6 655 695
- PATENT ABSTRACTS OF JAPAN vol. 016, no. 190 (C-0937), 8 mai 1992 (1992-05-08) & JP 04 026568 A (NIPPON CEMENT CO LTD), 29 janvier 1992 (1992-01-29)

## Description

### Titre de l'invention

Assemblage par brasage entre une pièce métallique à base de titane et une pièce en matériau céramique à base de carbure de silicium (SiC) et/ou de carbone.

### Arrière-plan de l'invention

La présente invention concerne le domaine de l'assemblage par brasage d'une pièce métallique en titane et d'une pièce en matériau céramique à base de carbure de silicium (SiC) et/ou de carbone.

De façon connue les matériaux céramiques sont caractérisés par leurs propriétés mécaniques qui les rendent aptes à constituer des éléments de structure et par leur capacité à conserver ces propriétés mécaniques à température élevée. Ces matériaux sont utilisés notamment pour la fabrication de pièces subissant des contraintes thermomécaniques élevées dans les applications aéronautiques (pièces de moteur ou éléments de carénage).

L'assemblage entre les matériaux céramiques et les métaux se fait traditionnellement par une liaison mécanique de type rivetage ou boulonnage, liaison parfois inadaptée pour des raisons d'encombrement ou de difficultés de mise en oeuvre.

D'autre part, les méthodes connues d'assemblage homogène des matériaux céramiques utilisant des précurseurs organiques céramiques ne sont pas adaptées aux assemblages hétérogènes d'un matériau céramique sur un métal.

Par ailleurs, les techniques connues de brasage utilisées pour des liaisons homogènes céramique/céramique peuvent difficilement être utilisées pour un brasage hétérogène matériau céramique sur métal en raison des comportements thermomécaniques et chimiques très différents des matériaux céramiques et des métaux.

Plus précisément, si l'on souhaite assembler par brasure un matériau céramique et un alliage métallique à base de titane, d'aluminium et de vanadium, on se trouve confronté à une différence de dilatation très importante entre ces deux éléments, puisque le coefficient de dilatation d'un tel alliage métallique est environ deux à cinq fois supérieur à celui des matériaux céramiques. De sorte que, pour un assemblage typique de 30 mm, il faut récupérer un décalage de dilatation de 0,2 mm lors du refroidissement de la température de solidification de la brasure à la température ambiante de cet assemblage.

Le plus grand retrait relatif de la pièce métallique engendre de fortes contraintes dans les deux pièces et en particulier une zone en compression, respectivement en traction, dans les zones adjacentes au joint de brasure de la pièce céramique, respectivement de la pièce métallique.

Il s'ensuit en conséquence une flexion de l'ensemble faisant naître des contraintes pouvant être à l'origine de la rupture de l'un des constituants, et une mauvaise tenue du joint de brasure du fait de sa déformation localisée.

L'invention se propose de résoudre le problème précité en intercalant, entre la pièce métallique et la pièce en matériau céramique, des intercalaires à coefficient de dilatation progressif constituant ainsi un empilement d'éléments devant être assemblés thermiquement deux à deux par brasage.

Se pose alors le problème du choix des matériaux intercalaires, et des brasures compatibles avec ces matériaux, ceux-ci devant répondre aux problèmes généraux de compatibilité chimique, en remplissant notamment une fonction dite de « barrière chimique » permettant, d'une part, d'éviter la migration d'éléments du matériau céramique (carbure de silicium, carbone, ...) vers la pièce métallique ou l'inverse et, d'autre part, d'empêcher la formation de composés chimiques indésirables.

Plus précisément, l'incompatibilité chimique et thermomécanique entre la pièce en matériau céramique et le métal ne permet pas la mise en oeuvre d'un brasage direct pour un fonctionnement haute température car :
- la plupart des matériaux réagissent très fortement avec le SiC au-delà de 1000°C, conduisant à la formation de nombreuses porosités et de composés intermétalliques fragiles et à bas point de fusion fortement dommageables pour la tenue mécanique des assemblages,
- la très grande différence des Coefficients de Dilatation Thermique (CTE) des métaux (10 à 20.10⁻⁶ par degré Celsius) et des CMC-SiC (2 à 6.10⁻⁶ par degré Celsius) crée des contraintes résiduelles élevées aux interfaces conduisant à la rupture de l'assemblage après refroidissement.

Cette incompatibilité constitue une difficulté majeure nécessitant que soient étudiés à la fois les aspects chimiques, géométriques et procédés.

US 5,113,052, JP 04 026568 et US 6,131,797 divulguent d'intercaler des inserts entre deux matériaux de coefficients de dilatation thermiques différents. US 6,655,695 et US 4,239,502 divulguent différents types d'alliages de soudure.

### Objet et résumé de l'invention

La présente invention a donc pour but principal de résoudre ces problèmes en proposant un assemblage qui permette d'une part de compenser l'écart de dilatation entre la pièce métallique et la pièce céramique et, d'autre part, d'éviter ou limiter la formation de composés chimiques indésirables.

Plus précisément, l'invention concerne un assemblage entre une pièce métallique à base de titane et une pièce en matériau céramique à base de carbure de silicium et/ou de carbone. Cet assemblage comporte une structure empilée comportant les éléments suivants assemblés deux à deux par brasage :
- la pièce métallique ;
- un premier intercalaire apte à se déformer pour accommoder un différentiel de dilatation entre la pièce métallique et la pièce en matériau céramique ;
- un deuxième intercalaire rigide, de coefficient de dilatation proche de celui de la pièce en matériau céramique, en nitrure d'aluminium ou en tungstène, et
- la pièce en matériau céramique.

L'invention propose donc d'intercaler entre les pièces céramique et métallique deux pièces intercalaires ayant des fonctions distinctes.

La première pièce intercalaire permet de compenser les écarts de dilatation entre les pièces céramique et métallique, en se déformant.

Selon un premier mode de réalisation de la première pièce intercalaire, la déformation de cette pièce est obtenue en réalisant celle-ci en un métal ductile. Dans ce cas, la pièce de structure massive forme une couche de matière ductile apte à s'allonger/se rétracter entre les pièces céramique et métallique.

Dans ce premier mode de réalisation, le premier intercalaire est préférentiellement en titane sensiblement pur.

Dans un deuxième mode de réalisation, le premier intercalaire est constitué par une structure déformable ("compliant" en anglais).

Préférentiellement, cette structure comporte au moins un élément intercalaire de liaison assemblé par brasage à la pièce métallique et au deuxième intercalaire, l'élément intercalaire de liaison étant constitué d'une nappe déformable présentant des zones en méplat brasées et des zones déformables.

Préférentiellement, cette structure déformable est constituée par au moins une pièce dont la forme générale est celle d'un ruban replié en accordéon définissant des parties incurvées tournées alternativement vers la pièce métallique et vers le deuxième intercalaire, les parties incurvées étant séparées par des crêtes, l'assemblage par brasage entre le premier intercalaire d'une part et la pièce métallique ou le deuxième intercalaire d'autre part étant réalisé sur une zone en méplat d'au moins certaines des crêtes.

La deuxième pièce intercalaire présente, tout d'abord, un coefficient de dilatation inférieur à celui de la première pièce intercalaire métallique et de préférence suffisamment proche de celui de la pièce céramique, afin de limiter les écarts de dilatation entre ces pièces.

Ensuite, la deuxième pièce intercalaire joue le rôle de barrière chimique en empêchant la migration d'éléments métalliques vers la pièce céramique, ce qui permet d'éviter la formation de composés chimiques fragiles, nuisibles à la bonne tenue de l'assemblage.

Enfin, cette deuxième pièce intercalaire peut être choisie suffisamment élastique pour permettre d'atténuer les contraintes mécaniques s'exerçant sur la pièce céramique et suffisamment rigide pour permettre de répartir les contraintes mécaniques s'exerçant sur la pièce céramique, ce qui permet de protéger mécaniquement cette pièce qui, par nature, est généralement fragile.

De façon préférée, la pièce métallique est constituée par un alliage à base de titane, d'aluminium et de vanadium. Cet alliage est appelé "TA6V".

Le coefficient de dilatation de l'alliage TA6V, à 500°C, est égal à 10,5.10⁻⁶ K⁻¹ ± 15%.

Dans un mode de réalisation de l'invention, la pièce en matériau céramique est formée de carbure de silicium massif ou monolithique. Ce matériau peut notamment être obtenu par frittage de poudre ou de granulés de carbure de silicium. La matrice céramique peut être monophasée, par exemple être constituée entièrement en SiC. La matrice peut alternativement être multiphasée, la matrice contenant par exemple une séquence de couches alternées de rigidités différentes à base de carbure de silicium fritté et/ou de carbone pyrolysé et pouvant comprendre en outre au moins une phase autocicatrisante telle qu'une couche à base de carbure de silicium boré Si-B-C.

Dans un autre mode de réalisation de l'invention, la pièce en matériau céramique comporte une matrice céramique renforcée par des fibres de carbone ou de carbure de silicium, notamment avec une couche de carbure de silicium en surface.

Dans le mode de réalisation dans lequel la pièce en matériau céramique comporte une matrice céramique renforcée par des fibres de carbone ou de carbure de silicium, cette matrice peut comporter au moins une phase autocicatrisante. Un tel matériau céramique, dénommé ci-après "A410", et un procédé d'obtention de ce matériau céramique sont décrits dans la demande de brevet français publiée sous le n° FR 2 732 338.

Le coefficient de dilatation du matériau "A410", à 500°C, est égal à 4,0.10⁻⁶ K⁻¹ ± 15%.

Dans une autre variante préférée, la pièce en matériau céramique est une pièce en matériau thermostructural comprenant un renfort fibreux en fibre de carbone et une matrice séquencée avec alternance de couches en matière relativement souple capables de dévier d'éventuelles fissures qui les atteignent et de couches en matière céramique relativement rigide.

Un tel matériau, dénommé ci-après "A500", peut être obtenu par un procédé d'élaboration tel que celui décrit dans la demande de brevet FR 2 742 433.

Le coefficient de dilatation du composé « A500 », à 500°C, est égal à 2,5.10⁻⁶ K⁻¹ ± 15%.

La pièce en matériau céramique étant très cassante, il est nécessaire que le deuxième intercalaire soit apte à encaisser les efforts et que son coefficient de dilatation soit proche de la pièce en matériau céramique.

Aussi les inventeurs ont avantageusement retenu, pour ce deuxième intercalaire, le nitrure d'aluminium (AIN) ou le tungstène (W) très rigides et de coefficients de dilatation très légèrement supérieurs à celui de la céramique.

Le coefficient de dilatation du tungstène W et du nitrure d'aluminium, à 500°C, sont respectivement égaux à 5,0.10⁻⁶ K⁻¹ ± 15% et 5,2.10⁻⁶ K⁻¹ ± 15%.

Conformément à l'invention, la brasure utilisée doit être réactive, ce qui signifie qu'elle doit réagir avec au moins un des éléments chimiques des matériaux en vis-à-vis.

Pour cette raison, une brasure composée d'argent pur a été écartée, l'argent n'étant pas réactif au sens de la définition précédente. Par ailleurs, la température de fusion de l'argent est beaucoup trop basse pour les applications visées de l'invention.

Une brasure de type Ag-Cu a également été écartée, celle-ci ne possédant pas les propriétés de « mouillage » suffisantes vis-à-vis du nitrure d'aluminium et de la pièce en matériau céramique à base de carbure de silicium et/ou de carbone. La brasure utilisée est une brasure à base d'argent. d'argent. Cette brasure est de type Ag-Cu-Ti ou Ag-Mn.

Dans le cas de la brasure Ag-Cu-Ti, le pourcentage pondéral d'argent est au moins égal à 50% et le pourcentage pondéral de titane est choisi entre 0.01% et 6%. Cette brasure est en effet très réactive avec l'aluminium, le tungstène et le silicium, y compris pour des faibles proportions de titane.

Préférentiellement, la brasure Ag-Cu-Ti retenue par l'invention comprend en pourcentages pondéraux : 63 Ag, 35.25 Cu et 1,75 Ti.

Cette brasure présente l'avantage d'être disponible commercialement sous le nom CuSil-ABA (dénomination commerciale).

Dans le cas de la brasure Ag-Mn, le pourcentage pondéral de manganèse est choisi entre 1% et 25%, la proportion de manganèse s'expliquant par le fait que le manganèse possède des propriétés réactives avec les éléments précités un peu inférieures à celle du titane.

L'invention concerne aussi une tuyère de turbomachine comportant au moins un assemblage tel que mentionné ci-dessus dans lequel la pièce métallique est un carter (ou un levier) de cette tuyère et la pièce en matériau céramique est un volet de cette tuyère.

L'invention vise aussi une chambre de combustion de turbomachine comportant au moins un assemblage tel que mentionné ci-dessus dans lequel la pièce métallique est un carter (ou un joint - c'est à dire un élément de liaison - ou une pièce) de cette chambre et la pièce en matériau céramique une pièce constitutive de cette chambre.

L'invention concerne aussi un équipement de post-combustion de turbomachine comportant au moins un assemblage tel que mentionné ci-dessus dans lequel la pièce métallique est un carter de post-combustion (ou une plateforme) et la pièce en matériau céramique est un bras accroche-flammes.

L'invention concerne encore une turbomachine comportant au moins un assemblage tel que mentionné précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un assemblage conforme à un premier mode de réalisation de l'invention ; et
- la figure 2 représente un assemblage conforme à l'invention dans un deuxième mode de réalisation.

### Description détaillée de plusieurs modes de réalisation

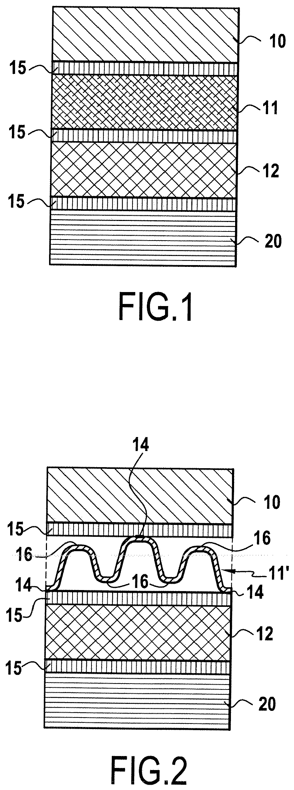

La **figure 1** représente un assemblage conforme à l'invention dans un premier mode de réalisation. Il est constitué principalement par quatre pièces assemblées deux à deux par brasage, à savoir :
- une pièce métallique 10 à base de titane ;
- une pièce en matériau céramique 20 à base de carbure de silicium et/ou de carbone ;
- un premier intercalaire 11 apte à se déformer pour accommoder la différence de dilatation entre la pièce métallique 10 et la pièce en matériau céramique 20 ; et
- un deuxième intercalaire 12 en nitrure d'aluminium AIN ou en tungstène W.

Dans l'exemple décrit ici, la pièce métallique 10 est une plaque ou plaquette en alliage à base de titane, d'aluminium et de vanadium (TA6V).

La pièce en matériau céramique 20 peut être constituée par une plaque ou plaquette en carbure de silicium monolithique (ou massif), ou en matériau "A410" ou "A500" tels que mentionnés précédemment.

Dans un autre mode de réalisation, la pièce en matériau céramique 20 est un matériau composite à matrice céramique. Cette matrice céramique peut être monophasée - par exemple entièrement en SiC - ou multiphasée, par exemple contenant en plus au moins une phase à propriété auto cicatrisante telle que décrite dans le brevet FR 2,732,338.

On rappelle qu'un tel matériau renforcé par des fibres de SiC est ici dénommé « A410 ».

En variante, le matériau CMC est constitué par un renfort fibreux en carbone et une matrice céramique séquencée, alternant des couches relativement souples- capables de dévier des fissures et des couches en matière céramique rigide. On rappelle qu'un tel matériau est ici dénommé « A500 ». Il peut être obtenu par un procédé d'élaboration tel que décrit dans la demande de brevet FR 2,742,433.

Parmi les exemples de matériaux composites thermo structuraux on peut citer : les composites carbone/carbone (C/C) et les composites à matrice céramique (CMC) tels que C/SiC ou SiC/SiC (renfort en fibres de carbone ou SiC et matrice carbure de silicium) ou C/C-SiC (renfort en fibres de carbone et matrice mixte de carbone et carbure de silicium) ou C/Si-B-C (renfort en fibres de carbone et matrice auto cicatrisante) ou encore C/C-SiC-Si (composite C/C siliciuré par réaction avec Si).

Dans l'exemple décrit ici, le premier intercalaire 11 présente une structure massive. Cette pièce 11 est alors en matériau suffisamment ductile pour se déformer et compenser ainsi l'écart de dilatation entre les pièces métallique et céramique. Bien entendu, les dimensions de cette première pièce intercalaire 11 et, en particulier, son épaisseur, doivent être suffisantes pour que cette pièce puisse jouer son rôle de pièce déformable sans atteindre des déformations trop importantes.

Dans le mode de réalisation décrit ici, le premier intercalaire 11 est en titane sensiblement pur, du T40. Du T30 ou du T60 pourraient aussi être utilisés.

Le Tableau 1 ci-après regroupe six assemblages conformes à la figure 1 décrite précédemment.

En première colonne, sont données respectivement la composition (A410 ou A500) de la pièce en matériau céramique 20, la composition (AIN ou W) du deuxième intercalaire 12, la composition (T40, titane sensiblement pur) du premier intercalaire 11 et la composition (alliage de titane, d'aluminium et de vanadium TA6V) de la pièce métallique 10.

En deuxième colonne, on donne la composition de la brasure utilisée dans ces assemblages, celle-ci étant référencée 15 à la figure 1.

Cette brasure est constituée soit par une brasure de type Ag-Mn (Mn 15%), soit par une brasure de type Ag-Cu-Ti (63 Ag ; 35,25 Cu ; 1,75 Ti).

Ces six assemblages ont résisté dans un premier temps au refroidissement de la température de brasage à la température ambiante.

De plus ces assemblages ont été soumis à des tests de cisaillement à l'aide d'une éprouvette comportant un assemblage symétrisé : pièce CMC / intercalaire W ou AIN / intercalaire Ti / pièce métallique à base de titane/ intercalaire Ti / intercalaire W ou AIN / pièce CMC.

Les pièces d'extrémités en matériaux CMC ont été immobilisées dans des mors latéraux, tandis que la pièce métallique au centre est soumise à une force transversale, ce qui exerce globalement des contraintes de cisaillement dans les deux zones intermédiaires entre chaque pièce d'extrémité en CMC et la pièce centrale en métal, au niveau des intercalaires.

La dernière colonne de ce tableau indique la valeur relative de la résistance en cisaillement atteinte lors de la rupture de l'assemblage sous test en cisaillement.

Cette résistance relative doit être appréciée par rapport à la résistance en cisaillement de la pièce 20 en matériau céramique seule, hors assemblage.

Ainsi, l'homme du métier comprendra que la résistance en cisaillement de l'assemblage n° 1 est égale à 50% de la résistance en cisaillement du matériau A500.

**Tableau 1**

| | Assemblage | Brasure | F/So (MPa) |
|---|---|---|---|
| 1 | A500-W-T40-TA6V | Ag-Mn (Mn 15%) | 50% |
| 2 | A410-W-T40-TA6V | Ag-Mn (Mn 15%) | 200% |
| 3 | A500-AIN-T40-TA6V | Ag-Cu-Ti (63 Ag ; 35,25 Cu; 1,75 Ti) | 50%-80% |
| 4 | A410-AIN-T40-TA6V | Ag-Cu-Ti (63 Ag ; 35,25 Cu; 1,75 Ti) | 70%-130% |
| 5 | A500-W-T40-TA6V | Ag-Cu-Ti (63 Ag ; 35,25 Cu; 1,75 Ti) | 40%-70% |
| 6 | A410-W-T40-TA6V | Ag-Cu-Ti (63 Ag ; 35,25 Cu; 1,75 Ti) | 70%-130% |

On voit que la résistance en cisaillement de l'assemblage obtenu selon l'invention atteint, voire dépasse (dans les cas les plus favorables) la résistance en cisaillement de la pièce en matériau CMC. Ceci constitue une qualité déterminante pour un tel assemblage mécanique (résistance du joint atteignant une valeur égale ou supérieure aux pièces assemblées).

La **figure 2** représente un autre assemblage conforme à l'invention, dans lequel le premier intercalaire 11' est constitué par une structure déformable ("compliant" en anglais).

De façon générale la pièce intercalaire 11' peut être formée par une nappe déformable 16 comportant des ondulations concentriques et des zones en méplat 14 aménagées alternativement sur les crêtes opposées des ondulations, ou sur certaines seulement de ces crêtes. Ces zones de méplats 14 sont brasées alternativement, selon leur orientation, soit sur la pièce métallique 10, soit sur le deuxième intercalaire 12.

Dans l'exemple de réalisation de la figure 2, cette structure déformable 11' est constituée par une pièce dont la forme générale est celle d'un ruban replié en accordéon définissant des parties incurvées tournées alternativement vers la pièce métallique 10 et vers le deuxième intercalaire 12.

Ces parties incurvées sont séparées par des crêtes 14, 16, l'assemblage par brasage 15 entre ce premier intercalaire 11' et la pièce métallique 10 ou le deuxième intercalaire 12 étant réalisé sur une zone 14 en méplat de certaines de ces crêtes.

L'assemblage de l'invention peut être mis en oeuvre dans une turbomachine et, plus particulièrement, dans un turboréacteur. Par exemple, la pièce métallique 10 peut appartenir à un carter du turboréacteur et ladite pièce céramique peut être : un volet de tuyère, une pièce de la chambre de combustion ou un bras accroche-flamme de post-combustion.

## Revendications

1. Assemblage entre une pièce métallique (10) à base de titane et une pièce en matériau céramique (20) à base de carbure de silicium et/ou de carbone, **caractérisé en ce qu'**il comporte une structure empilée comportant les élément suivants assemblés deux à deux par brasage :
- ladite pièce métallique (10) ;
- un premier intercalaire (11) apte à se déformer pour accommoder un différentiel de dilatation entre ladite pièce métallique (10) et ladite pièce en matériau céramique (20) ;
- un deuxième intercalaire (12) rigide, de coefficient de dilatation proche de celui de ladite pièce en matériau céramique (20), en nitrure d'aluminium (AIN) ou en tungstène (W), et
- ladite pièce en matériau céramique (20),
dans lequel la brasure qui assemble ledit deuxième intercalaire (12) à la pièce en matériau céramique (20) est de type Ag-Mn avec un pourcentage pondéral de manganèse (Mn) compris entre 1% et 25%.

2. Assemblage entre une pièce métallique (10) à base de titane et une pièce en matériau céramique (20) à base de carbure de silicium et/ou de carbone, **caractérisé en ce qu'**il comporte une structure empilée comportant les éléments suivants assemblés deux à deux par brasage :
- ladite pièce métallique (10) ;
- un premier intercalaire (11) apte à se déformer pour accommoder un différentiel de dilatation entre ladite pièce métallique (10) et ladite pièce en matériau céramique (20) ;
- un deuxième intercalaire (12) rigide, de coefficient de dilatation proche de celui de ladite pièce en matériau céramique (20), en nitrure d'aluminium (AIN) ou en tungstène (W), et
- ladite pièce en matériau céramique (20),
dans lequel la brasure qui assemble ledit deuxième intercalaire (12) à la pièce en matériau céramique (20) est de type Ag-Cu-Ti avec un pourcentage pondéral d'argent (Ag) au moins égal à 50% et un pourcentage pondéral de titane (Ti) compris entre 0,01% et 6%.

3. Assemblage selon la revendication 2, **caractérisé en ce que** ladite brasure Ag-Cu-Ti comprend en pourcentages pondéraux : 63% d'Ag; 35,25% de Cu; et 1,75% de Ti.

4. Assemblage selon l'une quelconque des revendications 1 à 3, **caractérisé en ce que** ladite pièce en matériau céramique (20) est formée de carbure de silicium massif.

5. Assemblage selon l'une quelconque des revendications 1 à 3, **caractérisé en ce que** ladite pièce en matériau céramique (20) comporte une matrice céramique renforcée par des fibres de carbone ou de carbure de silicium.

6. Assemblage selon la revendication 5, **caractérisé en ce que** ladite matrice comporte au moins une phase autocicatrisante.

7. Assemblage selon l'une quelconque des revendications 1 à 6, **caractérisé en ce que** la pièce métallique (10) est en alliage à base de titane, d'aluminium et de vanadium.

8. Assemblage selon l'une quelconque des revendications 1 à 7 dans lequel le premier intercalaire (11) est en matériau massif ductile.

9. Assemblage selon la revendication 8, **caractérisé en ce que** ledit premier intercalaire (11) est en titane sensiblement pur.

10. Assemblage selon l'une quelconque des revendications 1 à 7, **caractérisé en ce que** ledit premier intercalaire est formé par une structure déformable (11').

11. Assemblage selon la revendication 10, **caractérisé en ce que** ladite structure déformable (11') comporte au moins un élément intercalaire de liaison (11') assemblé par brasage à la pièce métallique (10) et audit deuxième intercalaire (12), ledit élément intercalaire de liaison étant formé d'une nappe déformable présentant des ondulations concentriques (16) et des zones en méplat (14) brasées.

12. Assemblage selon la revendication 11, **caractérisé en ce que** ladite structure déformable (11') comporte au moins une pièce dont la forme générale est celle d'un ruban replié en accordéon définissant des parties incurvées tournées alternativement vers la pièce métallique (10) et vers le deuxième intercalaire (12), lesdites parties incurvées étant séparées par des crêtes (16), l'assemblage par brasage (15) entre la pièce métallique (10) et le premier intercalaire d'une part et ou le deuxième intercalaire (12) d'autre part étant réalisé sur des zones (14) en méplat d'au moins certaines desdites crêtes (14, 16).

13. Tuyère de turbomachine comportant au moins un assemblage selon l'une quelconque des revendications 1 à 12, dans laquelle ladite pièce métallique (10) est un carter de ladite tuyère et ladite pièce en matériau céramique (20) est un volet de ladite tuyère.

14. Chambre de combustion de turbomachine comportant au moins un assemblage selon l'une quelconque des revendications 1 à 12, dans laquelle ladite pièce métallique (10) est un carter de ladite chambre et ladite pièce en matériau céramique (20) est une pièce constitutive de ladite chambre.

15. Equipement de post-combustion d'une de turbomachine comportant au moins un assemblage selon l'une quelconque des revendications 1 à 12, dans lequel ladite pièce métallique (10) est un carter de post-combustion et ladite pièce en matériau céramique (20) est un bras accroche-flammes.

16. Turbomachine comportant au moins un assemblage selon l'une quelconque des revendications 1 à 12.

## Patentansprüche

1. Verbindung zwischen einem Metallteil (10) auf der Basis von Titan und einem Teil aus Keramikwerkstoff (20) auf der Basis von Siliziumkarbid und/oder Kohlenstoff, **dadurch gekennzeichnet, dass** sie eine gestapelte Struktur umfasst, welche die folgenden, paarweise verlöteten Elemente umfasst:
- das Metallteil (10),
- ein erstes Zwischenstück (11), das geeignet ist, sich zu verformen, um einen Ausdehnungsunterschied zwischen dem Metallteil (10) und dem Teil aus Keramikwerkstoff (20) auszugleichen,
- ein starres zweites Zwischenstück (12), mit einem Ausdehnungskoeffizienten nahe demjenigen des Teils aus Keramikwerkstoff (20), aus Aluminiumnitrid (AIN) oder aus Wolfram (W), und
- das Teil aus Keramikwerkstoff (20),
bei der die Lötnaht, welche das zweite Zwischenstück (12) mit dem Teil aus Keramikwerkstoff (20) verbindet, vom Typ Ag-Mn mit einem Gewichtsprozentsatz von Mangan (Mn) im Bereich zwischen 1 % und 25 % ist.

2. Verbindung zwischen einem Metallteil (10) auf der Basis von Titan und einem Teil aus Keramikwerkstoff (20) auf der Basis von Siliziumkarbid und/oder Kohlenstoff, **dadurch gekennzeichnet, dass** sie eine gestapelte Struktur umfasst, welche die folgenden, paarweise verlöteten Elemente umfasst:
- das Metallteil (10),
- ein erstes Zwischenstück (11), das geeignet ist, sich zu verformen, um einen Ausdehnungsunterschied zwischen dem Metallteil (10) und dem Teil aus Keramikwerkstoff (20) auszugleichen,
- ein starres zweites Zwischenstück (12), mit einem Ausdehnungskoeffizienten nahe demjenigen des Teils aus Keramikwerkstoff (20), aus Aluminiumnitrid (AIN) oder aus Wolfram (W), und
- das Teil aus Keramikwerkstoff (20),
bei der die Lötnaht, welche das zweite Zwischenstück (12) mit dem Teil aus Keramikwerkstoff (20) verbindet, vom Typ Ag-Cu-Ti mit einem Gewichtsprozentsatz von Silber (Ag) von wenigstens gleich 50 % und einem Gewichtsprozentsatz von Titan (Ti) im Bereich zwischen 0,01 % und 6 % ist.

3. Verbindung nach Anspruch 2, **dadurch gekennzeichnet, dass** die Ag-Cu-Ti-Lötnaht in Gewichtsprozentsätzen umfasst: 63 % Ag, 35,25 % Cu und 1,75 % Ti.

4. Verbindung nach einem der Ansprüche 1 bis 3, **dadurch gekennzeichnet, dass** das Teil aus Keramikwerkstoff (20) aus massivem Siliziumkarbid gebildet ist.

5. Verbindung nach einem der Ansprüche 1 bis 3, **dadurch gekennzeichnet, dass** das Teil aus Keramikwerkstoff (20) eine Keramikmatrix, welche durch Kohlenstoff- oder Siliziumkarbidfasern verstärkt ist, umfasst.

6. Verbindung nach Anspruch 5, **dadurch gekennzeichnet, dass** die Matrix wenigstens eine selbstheilende Phase umfasst.

7. Verbindung nach einem der Ansprüche 1 bis 6, **dadurch gekennzeichnet, dass** das Metallteil (10) aus Legierung auf Basis von Titan, Aluminium und Vanadium ist.

8. Verbindung nach einem der Ansprüche 1 bis 7, bei der das erste Zwischenstück (11) aus duktilem massivem Werkstoff besteht.

9. Verbindung nach Anspruch 8, **dadurch gekennzeichnet, dass** das erste Zwischenstück (11) aus im Wesentlichen reinem Titan besteht.

10. Verbindung nach einem der Ansprüche 1 bis 7, **dadurch gekennzeichnet, dass** das erste Zwischenstück durch eine verformbare Struktur (11') gebildet ist.

11. Verbindung nach Anspruch 10, **dadurch gekennzeichnet, dass** die verformbare Struktur (11') wenigstens ein Verbindungszwischenelement (11') umfasst, das mit dem Metallteil (10) und mit dem zweiten Zwischenstück (12) verlötet ist, wobei das Verbindungszwischenelement von einer verformbaren Lage, die konzentrische Wellen (16) und angelötete abgeflachte Bereiche (14) aufweist, gebildet ist.

12. Verbindung nach Anspruch 11, **dadurch gekennzeichnet, dass** die verformbare Struktur (11') wenigstens ein Teil umfasst, dessen Gesamtform die eines ziehharmonikaförmig gefalteten Bandes ist, das gekrümmte Teile, welche abwechselnd dem Metallteil (10) und dem zweiten Zwischenteil (12) zugewandt sind, definiert, wobei die gekrümmten Teile durch Kämme (16) getrennt sind, wobei die Lötverbindung (15) zwischen dem Metallteil (10) und dem ersten Zwischenstück einerseits und oder dem zweiten Zwischenstück (12) andererseits an abgeflachten Bereichen (14) von wenigstens einigen der Kämme (14, 16) hergestellt ist.

13. Düse einer Turbomaschine, umfassend wenigstens eine Verbindung nach einem der Ansprüche 1 bis 12, bei der das Metallteil (10) ein Gehäuse der Düse ist und das Teil aus Keramikwerkstoff (20) eine Klappe der Düse ist.

14. Brennkammer einer Turbomaschine, umfassend wenigstens eine Verbindung nach einem der Ansprüche 1 bis 12, bei der das Metallteil (10) ein Gehäuse der Kammer ist und das Teil aus Keramikwerkstoff (20) ein Bestandteil der Kammer ist.

15. Nachverbrennungseinrichtung einer Turbomaschine, umfassend wenigstens eine Verbindung nach einem der Ansprüche 1 bis 12, bei der das Metallteil (10) ein Nachverbrennungsgehäuse ist und das Teil aus Keramikwerkstoff (20) ein Flammenhalterarm ist.

16. Turbomaschine, umfassend wenigstens eine Verbindung nach einem der Ansprüche 1 bis 12.

## Claims

1. An assembly between a titanium-based metal piece (10) and a ceramic material piece (20) based on silicon carbide and/or carbon, the assembly being **characterized in that** it comprises a stack structure comprising the following elements assembled together in pairs by brazing:
• said metal piece (10);
• first intermediate piece (11) that is suitable for deforming to accommodate differential expansion between said metal piece (10) and said ceramic material piece (20);
• a second intermediate piece (12) that is rigid, that has a coefficient of expansion close to that of said ceramic material piece (20), and that is made of aluminum nitride (AlN) or of tungsten (W); and
• said ceramic material piece (20),
wherein the brazing composition that assembles said second intermediate piece (12) to the ceramic material piece (20) is of the Ag-Mn type with a percentage by weight of manganese (Mn) that lies in the range 1% to 25%.

2. An assembly between a titanium-based metal piece (10) and a ceramic material piece (20) based on silicon carbide and/or carbon, the assembly being **characterized in that** it comprises a stack structure comprising the following elements assembled together in pairs by brazing:
• said metal piece (10);
• a first intermediate piece (11) that is suitable for deforming to accommodate differential expansion between said metal piece (10) and said ceramic material piece (20);
• a second intermediate piece (12) that is rigid, that has a coefficient of expansion close to that of said ceramic material piece (20), and that is made of aluminum nitride (AlN) or of tungsten (W); and
• said ceramic material piece (20),
wherein the brazing composition that assembles said second intermediate piece (12) and the ceramic material piece (20) is of the Ag-Cu-Ti type with a percentage by weight of silver (Ag) not less than 50% and a percentage by weight of titanium (Ti) lying in the range 0.01% to 6%.

3. An assembly according to claim 2, **characterized in that** said Ag-Cu-Ti brazing composition comprises the following percentages by weight: 63% of Ag; 35.25% of Cu; and 1.75% of Ti.

4. An assembly according to any one of claims 1 to 3, **characterized in that** said ceramic material piece (20) is made of solid silicon carbide.

5. An assembly according to any one of claims 1 to 3, **characterized in that** said ceramic material piece (20) comprises a ceramic matrix reinforced by silicon carbide or carbon fibers.

6. An assembly according to claim 5, **characterized in that** said matrix includes at least one self-healing phase.

7. An assembly according to any one of claims 1 to 6, **characterized in that** the metal piece (10) is made of an alloy based on titanium, aluminum, and vanadium.

8. An assembly according to any one of claims 1 to 7, in which said first intermediate piece (11) is made of a ductile solid material.

9. An assembly according to claim 8, **characterized in that** said first intermediate piece (11) is made of substantially pure titanium.

10. An assembly according to any one of claims 1 to 7, **characterized in that** said first intermediate piece is in the form of a deformable structure (11').

11. An assembly according to claim 10, **characterized in that** said deformable structure (11') includes at least one connecting intermediate element (11') assembled by brazing to said metal piece (10) and to said second intermediate piece (12), said connecting intermediate element being in the form of a deformable sheet presenting concentric undulations (16) and brazed flat zones (14).

12. An assembly according to claim 11, **characterized in that** said deformable structure (11') includes at least one piece having the general shape of a concertina-folded tape defining curved portions facing alternately towards the metal piece (10) and towards the second intermediate piece (12), said curved portions being separated by peaks (16), assembly by brazing (15) between the metal piece (10) and the first intermediate piece or the second intermediate piece (12) as the case may be being performed via flat zones (14) of at least some of said peaks (14, 16).

13. A turbomachine nozzle including at least one assembly according to any one of claims 1 to 12, in which said metal piece (10) is a casing of said nozzle and said ceramic material piece (20) is a flap of said nozzle.

14. A turbomachine combustion chamber including at least one assembly according to any one of claims 1 to 12, in which said metal piece (10) is a casing of said chamber and said ceramic material piece (20) is a component part of said chamber.

15. Post-combustion equipment for a turbomachine, the equipment including at least one assembly according to any one of claims 1 to 12, in which said metal piece (10) is a post-combustion casing and said ceramic material piece (20) is a flame-holder arm.

16. A turbomachine including at least one assembly according to any one of claims 1 to 12.
